# EUROPÄISCHE PATENTSCHRIFT

(11) **EP 1 727 715 B1**
(45) Veröffentlichungstag und Bekanntmachung des Hinweises auf die Patenterteilung: **10.04.2013**
(21) Anmeldenummer: 05716612.6
(22) Anmeldetag: 01.02.2005
(51) Int. Cl.: B60S 1/16, F16H 55/24, F16H 57/12

(54) **SCHEIBENWISCHVORRICHTUNG**
WIPER DEVICE
DISPOSITIF ESSUIE-GLACE

(30) Priorität: 12.03.2004 DE 102004012121
(43) Veröffentlichungstag der Anmeldung: 06.12.2006
(73) Patentinhaber: ROBERT BOSCH GMBH, 70442 Stuttgart (DE)
(72) Erfinder: HUESGES, Mario, 77830 Buehlertal (DE); HAWIGHORST, Achim, 77830 Buehlertal (DE)
(86) Internationale Anmeldenummer: PCT/EP2005/050423
(87) Internationale Veröffentlichungsnummer: WO 2005/087558

(56) Entgegenhaltungen:
- EP-A- 0 563 583
- EP-A- 1 172 576
- WO-A-02/33805
- US-A- 4 742 726
- US-A- 5 169 245
- US-A- 5 212 999
- US-A1- 2003 172 761

## Beschreibung

Die Erfindung betrifft eine Scheibenwischvorrichtung, insbesondere für ein Kraftfahrzeug, mit mindestens einem Getriebe und einer Einrichtung zur Reduzierung eines Zahnflankenspiels von Zähnen miteinander in Eingriff stehender Zahnräder gemäß dem Oberbegriff des Anspruches 1.

Bei einer bekannten Lösung wird das Zahnflankenspiel von Zähnen miteinander in Eingriff befindlicher Zahnräder durch eine im Getriebegehäuse angeordnete, eine Welle aufnehmende Exzenterbuchse minimiert, wobei auf der Welle mindestens ein Zahnrad angeordnet ist. Exzenterbuchsen verteuern durch ihre Stückkosten, insbesondere bei hohen Stückzahlen, das Getriebe. Außerdem erfordern Exzenterbuchsen einen gewissen Fertigungsaufwand, beispielsweise bei der Herstellung der Presspassung, durch welche die Exzenterbuchse gehalten wird.

Zur Reduzierung des Zahnflankenspieles von Zähnen miteinander in Eingriff befindlicher Zahnräder sind weiter aus der EP-A-0563583 in Fahrzeugen beispielsweise für den Fensterheberantrieb einzusetzende Getriebemotoren bekannt, die eine getriebeseitige Zahnradpaarung mit einem als Schnecke und einem als Schneckenrad ausgebildeten Zahnrad aufweisen. Schnecke und Schneckenrad sind auf sich kreuzenden Wellen angeordnet, von denen die die Schnecke tragende, motorseitig angetriebene Welle zum Ausgleich des Zahnspieles endseitig in einem axial federnd gegen das Getriebegehäuse abgestützten Lager angeordnet ist. Der das Wellenende aufnehmende Lagerkörper ist hierzu über eine umgreifende Schraubenfeder zum Getriebegehäuse axial verschieblich abgestützt.

Bei gleichem Grundaufbau erfolgt bei der US-A-5169245 die axial verspannte Abstützung der die Schnecke tragenden Welle dadurch, dass die Welle endseitig, zur Reibungsreduzierung, über einen halbkugelförmigen Ansatz an einer Stützplatte anliegt, die ihrerseits axial verschieblich über eine Schraubenfeder gegen das Getriebegehäuse abgestützt ist.

Eine aus der US-A-4722726 bekannte Lösung sieht eine axiale Abstützung des freien Endes der die Schnecke tragenden Welle gegen eine gehäuseseitig festgelegte plattenförmige Federscheibe vor, die in Richtung auf das Wellenende überwölbt ausgebildet ist.

Eine ähnliche punktuelle endseitige Abstützung einer die Schnecke tragenden Welle gegen eine in sich elastische oder über elastische Mittel hintergriffene Abstützung ist der US-A-203/0172761 oder der US-A-5212999 zu entnehmen.

Eine Welle endseitig zu lagern und das das Wellenende aufnehmende Lager in Richtung auf die Welle axial über ein elastisches Federelement abzustützen, zeigt die WO-A-02/33805, wobei das Lager auch radial elastisch gehalten ist und wobei der axiale Verschiebeweg des Lagers in Richtung auf die Welle durch eine radiale Einformung des zum Lager umschließenden Gehäuseteils begrenzt ist.

Schließlich ist es für Wellenlager, insbesondere Sintergleitlager aus der EP-A-11 72 576 bekannt, die Welle gegen das Lager axial über eine Anlaufscheibe abzustützen, die zur Reduzierung der Reibung und zur axialen Stoßdämpfung als Wellscheibe ausgebildet ist.

Der Erfindung liegt die Aufgabe zugrunde, eine weitere Lösung zur Reduzierung des Zahnflankenspiels bei Getriebeanordnungen für Scheibenwischvorrichtungen der eingangs genannten Art zu schaffen.

Erreicht wird dies mit den Merkmalen des Anspruches 1, demzufolge die miteinander in Eingriff stehenden Zahnräder durch ein Schneckenrad und ein Kegelrad gebildet sind und das an der mit dem Kegelrad bestückten Welle vorgesehene Lager über eine Einrichtung beaufschlagt ist, über die die miteinander in Eingriff stehenden Zahnräder gegeneinander gedrückt werden. Eine solche Lösung ermöglicht auch bei größeren Toleranzen konstruktiv einfach und preiswert die Reduzierung des Zahnflankenspieles.

Als die Zahnräder mit ihren Zähnen in Eingriff zueinander drückende Einrichtung kann bei bevorzugten Ausführungsformen eine Wellscheibe oder eine Tellerfeder eingesetzt werden, somit eine Feder in einer Form, die als preiswertes Standardbauteil zur Verfügung steht.

Das Lager lässt sich einfach realisieren, wenn es in einer Öffnung des Getriebegehäuses angeordnet ist.

Die Öffnung kann eine Verstemmung aufweisen, die auf die Welle drückt und somit die miteinander in Eingriff befindlichen Zahnräder gegeneinanderdrückt, wodurch das Zahnflankenspiel der miteinander in Eingriff befindlichen Zahnräder reduziert wird.

Alternativ kann die Öffnung mit einer umlaufenden Nut versehen sein, in die eine Scheibe oder dergleichen eingepresst werden kann. Die Scheibe oder dergleichen drückt dann auf die Welle, und drückt somit die miteinander in Eingriff befindlichen Zahnräder gegeneinander. Die umlaufende Nut kann entweder vorgefertigt sein oder entstehen, wenn die Scheibe oder dergleichen in die Öffnung gepresst wird.

In einer weiteren Ausführungsform kann sich die Öffnung von innen nach außen konisch verjüngen. Dadurch wird ein Widerlager geschaffen, das in Axialrichtung der Welle die miteinander in Eingriff befindlichen Zahnräder zur Reduzierung des Zahnflankenspiels gegeneinanderdrückt.

Das Lager kann in einem Deckel des Getriebegehäuses angeordnet sein. Dadurch wird die Montage des Lagers und der Welle erheblich vereinfacht. Außerdem wirkt der Deckel wie eine Feder. Folglich drückt er die miteinander in Eingriff befindlichen Zahnräder gegeneinander, um deren Zahnflankenspiel zu reduzieren.

Wenn der Deckel aus Metall gefertigt ist, besitzt er eine besonders gute Federwirkung. Er kann ein kostengünstiges Stanzteil sein, das tiefgezogen wird.

In einer preiswerten Alternative kann das Lager die Kunststoffbuchse zur Aufnahme der Welle aufweisen. Die Kunststoffbuchse bildet dann ein Topflager. Es kann in die Gehäuseöffnung eingespritzt werden.

Um den erforderlichen Druck zur Reduzierung des Zahnflankenspiels auf die Welle aufbringen zu können, kann an der Kunststoffbuchse ein Sicherungselement anliegen, das den erforderlichen Druck sicherstellt.

Zusätzlich oder alternativ zur Kunststoffbuchse kann das Lager zur Reduzierung des Lagerverschleißes eine zylindrische Hülse aufweisen. Außerdem reduziert die zylindrische Hülse Laufgeräusche und ermöglicht eine Übertragung höherer Drehmomente durch die Welle.

Einen besonders geringen Verschleiß und hohe Laufruhe gewährleistet die zylindrische Hülse, wenn sie aus einem gesinterten Werkstoff gefertigt und in Öl getränkt ist.

Damit die Reibung zwischen der Welle und dem Lager möglichst gering ist, kann an der Stirnseite der Welle eine Scheibe mit einer konvexen Seite angeordnet sein. Wenn die Welle mit ihrer Stirnseite an der konvexen Seite der Scheibe anliegt, existiert zwischen der Welle und der Scheibe nur eine sehr geringe Kontaktfläche, so dass auch nur eine sehr geringe Reibung zwischen der Welle und der Scheibe besteht.

In einer weiteren bevorzugten Ausführungsform kann an der Stirnseite der Welle eine Scheibe mit einem eine geringe Ausdehnung aufweisenden Absatz angeordnet sein. Durch den die geringe Ausdehnung aufweisenden Absatz besteht beim Kontakt der Welle mit dem Absatz ebenfalls nur eine sehr geringe Reibung.

Nachfolgend werden verschiedene Ausführungsbeispiele anhand der beiliegenden Zeichnungen näher erläutert.

Im Einzelnen zeigen:
- Fig. 1: eine Schnittansicht durch eine erste Ausführungsform des erfindungsgemäßen Getriebes;
- Fig. 2a: eine Schnittansicht durch eine zweite Ausführungsform des erfindungsgemäßen Getriebes;
- Fig. 2b: eine Schnittansicht durch eine dritte Ausführungsform des erfindungsgemäßen Getriebes;
- Fig. 3: eine Schnittansicht durch eine vierte Ausführungsform des erfindungsgemäßen Getriebes;
- Fig. 4: eine Schnittansicht durch eine fünfte Ausführungsform des erfindungsgemäßen Getriebes;
- Fig. 5a: eine Schnittansicht durch eine sechste Ausführungsform des erfindungsgemäßen Getriebes;
- Fig. 5b: eine Schnittansicht durch eine siebte Ausführungsform des erfindungsgemäßen Getriebes;
- Fig. 6: eine Schnittansicht durch eine achte Ausführungsform des erfindungsgemäßen Getriebes.

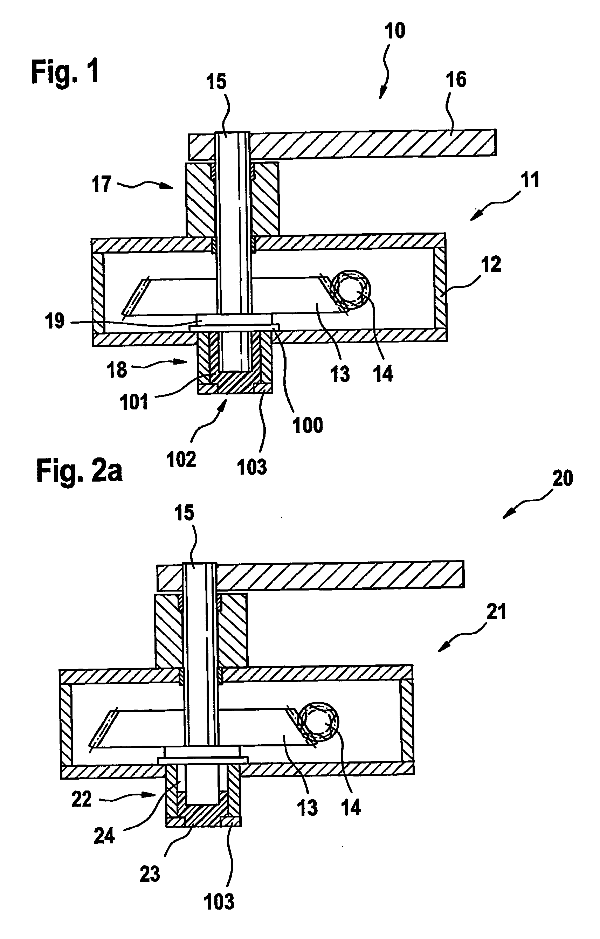

Fig. 1 zeigt eine Scheibenwischvorrichtung 10 mit einem Getriebe 11. Das Getriebe 11 weist in einem Getriebegehäuse 12 ein als ein Kegelrad ausgebildetes Zahnrad 13 und ein als ein Schneckenrad ausgebildetes Zahnrad 14 auf. Das Schneckenrad 14 kann beispielsweise mit einer Ankerwelle eines Wischermotors verbunden sein. Das Kegelrad 13 sitzt auf einer Welle 15, auf der auch eine Kurbel 16 angeordnet ist. Am Getriebegehäuse 12 sind ein Lager 17 und ein Lager 18 zur Lagerung der Welle 15 angeordnet. Das Lager 18 weist eine Feder 19 auf, die das Kegelrad 13 gegen das Schneckenrad 14 drückt, und dadurch das Zahnflankenspiel der miteinander in Eingriff befindlichen Zahnräder 13 und 14 reduziert. Zwischen der Feder 19 und dem Getriebegehäuse 12 ist eine Unterlagsscheibe 100 angeordnet. Ferner weist das Lager 18 eine Kunststoffbuchse 101 auf. Eine Öffnung 102 des Getriebegehäuses 12 ist mit einem umlaufenden Rand 103 versehen, der die Kunststoffbuchse 101 gegen das Ende der Welle 15 drückt, und somit das Kegelrad 13 gegen das Schneckenrad 14 presst. Folglich bildet der Rand 103 eine zusätzliche Maßnahme, um das Zahnflankenspiel der beiden miteinander in Eingriff befindlichen Zahnräder 13 und 14 zu reduzieren. Die Kunststoffbuchse 101 kann vorteilhafterweise in die Gehäuseöffnung 102 eingespritzt werden. Die Kunststoffbuchse 101 dichtet außerdem das Getriebe 11 im Bereich der Öffnung 102 gegenüber der Umgebung ab.

Fig. 2a zeigt eine Scheibenwischvorrichtung 20 mit einem Getriebe 21, dessen Lager 22 mit einer veränderten Kunststoffbuchse 23 und einer zylindrischen Hülse 24 ausgestattet ist. Die Kunststoffbuchse 23 nimmt bei dieser Ausführungsvariante hauptsächlich in axialer Richtung der Welle 15 wirkende Kräfte auf und dichtet das Getriebe 21 gegenüber der Umgebung ab. Die zylindrische Hülse 24 ist insbesondere bei größeren Getrieben 21 erforderlich, da bei größeren Getrieben 21 höhere Drehmomente übertragen werden und somit größere Lagerkräfte wirken. Die zylindrische Hülse 24 ist vorteilhafterweise aus einem gesinterten Werkstoff, der in Öl getränkt ist, gefertigt. Folglich weist das Lager 22 eine geringe Reibung und eine hohe Laufruhe auf.

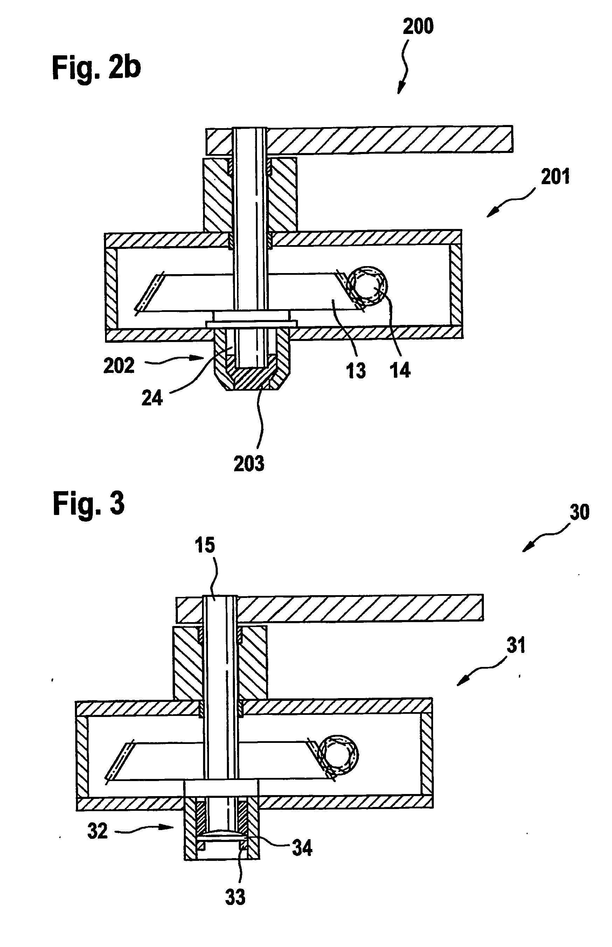

Fig. 2b zeigt eine Scheibenwischvorrichtung 200, deren Getriebe 201 ebenfalls mit einer zylindrischen Hülse 24 ausgerüstet ist, die jedoch ein konisch ausgebildetes Lager 202 und eine daran angepasste Kunststoffbuchse 203 aufweist. Durch die konische Ausgestaltung des Lagers 202 wird das Kegelrad 13 gegen das Schneckenrad 14 gedrückt. Dadurch wird deren Zahnflankenspiel minimiert. Die konische Ausbildung des Lagers 202 ersetzt also den umlaufenden Rand 103 (siehe Fign. 1 und 2a).

In Fig. 3 ist eine Scheibenwischvorrichtung 30 dargestellt, deren Getriebe 31 mit einem Lager 32 versehen ist. Das Lager 32 weist einen umlaufenden Rand 33 auf, der beispielsweise durch eine Verstemmung hergestellt werden kann. Zwischen dem Rand 33 und der Welle 15 ist eine mit einer konvexen Seite versehene Scheibe 34 angebracht. Die Welle 15 liegt mit ihrer Stirnseite an der konvexen Seite der Scheibe 34 an, so dass die Welle 15 und die Scheibe 34 nur eine minimale Berührungsfläche aufweisen. Durch diese konstruktive Maßnahme weist das Lager 32 nur eine minimale Lagerreibung auf.

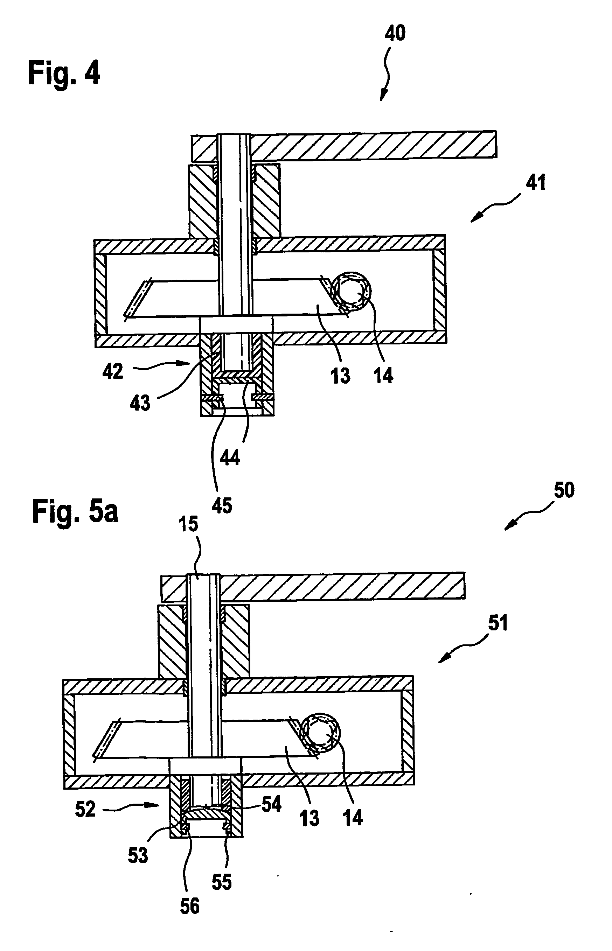

Die in Fig. 4. dargestellte Scheibenwischvorrichtung 40 ist mit einem Getriebe 41 versehen, in dessen Lager 42 eine aus Kunststoff oder einem Sintermaterial gefertigte Buchse 43 angeordnet ist, an der ein Sicherungselement 44 anliegt. Das Sicherungselement 44 wird bei der Herstellung einer umlaufenden Verstemmung 45 gegen die Kunststoffbuchse 43 gedrückt, wodurch das Zahnflankenspiel des Kegelrades 13 und des Schneckenrades 14 minimiert wird. Die Verstemmung 45 durchdringt das Sicherungselement 44, wodurch das Sicherungselement 44 in axialer Richtung fixiert wird. Ein umlaufender Rand 46 des Sicherungselements 44 verhindert ein Kippen des Sicherungselements 44.

Bei einer in Fig. 5a gezeigten Scheibenwischvorrichtung 50 ist ein Getriebe 51 vorgesehen, dessen Lager 52 mit einer Scheibe 53 ausgerüstet ist. Die Scheibe 53 besitzt einen Absatz 54, der eine geringe Ausdehnung aufweist. Durch die geringe Ausdehnung des Absatzes 54 besteht zwischen der an dem Absatz 54 anliegenden Welle 15 und dem Absatz 54 nur eine geringe Kontaktfläche, so dass auch das Lager 52 nur eine minimale Lagerreibung aufweist. Die Scheibe 53 besitzt einen Rand 55, durch den eine Verstemmung 56 hindurchgedrückt wird. Auf diese Weise wird der auf das Kegelrad 13 und das Schneckenrad 14 wirkende Druck zur Minimierung des Zahnflankenspiels aufrechterhalten. Durch den Rand 55 und die Verstemmung 56 kann die Scheibe 53 nicht kippen.

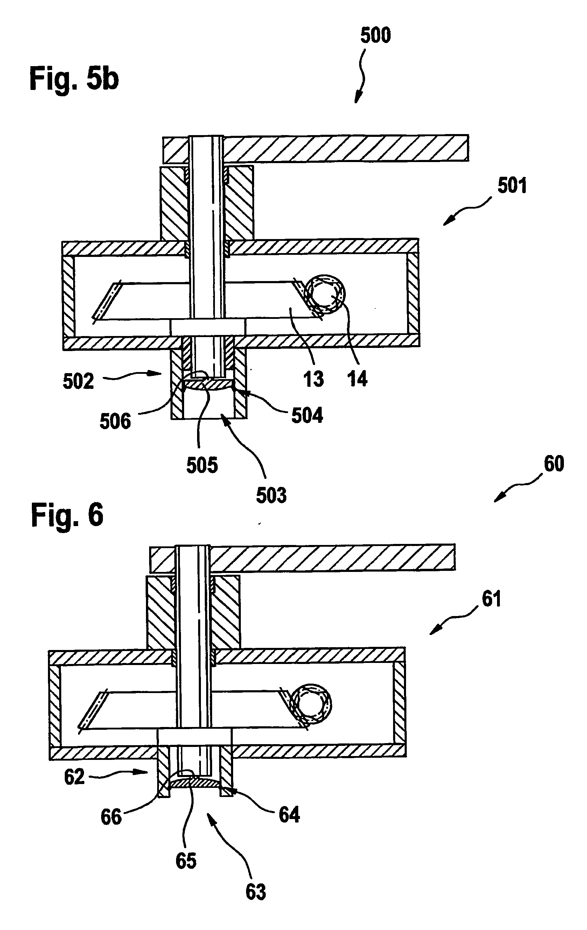

Bei einer in Fig. 5b gezeigten Ausführungsvariante einer Scheibenwischvorrichtung 500 mit einem Getriebe 501 ist ein Lager 502 vorgesehen, in dessen Öffnung 503 sich eine umlaufende Nut 504 befindet. Die umlaufende Nut 504 entsteht entweder beim Einpressen einer Scheibe 505 oder sie wird vorgefertigt. Die Nut 504 bildet einen Formschluss, der den Druck des Kegelrades 13 auf das Schneckenrad 14 sicherstellt. Durch diese konstruktive Maßnahme kann auf den Rand 103 (siehe Fig. 1) und die Verstemmungen 45 (siehe Fig. 4) und 56 (siehe Fig. 5a) verzichtet werden. Die Scheibe 505 weist einen eine geringe Ausdehnung aufweisenden Absatz 506 auf.

Fig. 6 zeigt eine Scheibenwischvorrichtung 60 mit einem Getriebe 61. Das Getriebe 61 weist ein Lager 62 auf, dass weder mit einer zylindrischen Hülse noch mit einer Kunststoffbuchse versehen ist. Stattdessen ist in einer Öffnung 63 eine umlaufende Nut 64 angebracht in die eine Scheibe 65 eingepresst ist. Diese Variante eignet sich besonders bei kleineren Getrieben 61, bei denen kleinere Drehmomente übertragen werden und somit nur geringere Lagerkräfte im Lager 62 wirken. Die Scheibe 65 weist ebenfalls einen eine geringe Ausdehnung aufweisenden Absatz 66 auf.

## Patentansprüche

1. Scheibenwischvorrichtung (10, 20, 200, 30, 40, 50, 500, 60), insbesondere für ein Kraftfahrzeug, mit mindestens einem Getriebe (11, 21, 201, 31, 41, 51, 501,61) und einer Einrichtung zur Reduzierung eines Zahnflankenspiels von Zähnen miteinander in Eingriff befindlicher Zahnräder (13, 14), wobei am Getriebegehäuse (12) ein Lager (18, 22, 202, 32, 42, 52, 502, 62) zur Lagerung einer mit mindestens einem Zahnrad (13) bestückten Welle (15) angeordnet ist, wobei das Lager (18, 22, 202, 32, 42, 52, 502, 62) mit einer Einrichtung versehen ist, die die miteinander in Eingriff befindlichen Zahnräder (13, 14) gegeneinander drückt und wobei von den miteinander in Eingriff befindlichen Zahnrädern (13, 14) das eine Zahnrad (14) als Schneckenrad ausgebildet ist, **dadurch gekennzeichnet, dass** das andere Zahnrad (13) als Kegelrad ausgebildet ist und dass in dem mit der die Zahnräder (13, 14) gegeneinander drückenden Einrichtung versehene Lager (18, 22, 202, 32, 42, 52, 502, 62) die mit dem Kegelrad (13) bestückte Welle (15) gelagert ist.

2. Scheibenwischvorrichtung (10, 20, 200) nach Anspruch 1, **dadurch gekennzeichnet, dass** das Lager (18, 22, 202, 32, 42 52, 502, 62) eine Feder (19) aufweist, die die miteinander in Eingriff befindlichen Zahnräder (13, 14) gegeneinander drückt.

3. Scheibenwischvorrichtung, (10, 20, 200) nach Anspruch 2, **dadurch gekennzeichnet, dass** die Feder (19) eine Wellscheibe oder eine Tellerfeder ist.

4. Scheibenwischvorrichtung (10, 20, 200, 30, 40, 50, 500, 60) nach einem der Ansprüche 1 oder 3, **dadurch gekennzeichnet, dass** das Lager (18, 22, 202, 32, 42, 52, 502, 62) in einer Öffnung (102, 503, 63) des Getriebegehäuses (12) angeordnet ist.

5. Scheibenwischvorrichtung (10, 20, 200, 30, 40, 50, 500, 60) nach Anspruch 4, **dadurch gekennzeichnet, dass** die Öffnung (102) eine Verstemmung(45, 56) aufweist.

6. Scheibenwischvorrichtung (500, 60) nach Anspruch 4, **dadurch gekennzeichnet, dass** die Öffnung (503, 63) mit einer umlaufenden Nut (504, 64) versehen ist.

7. Scheibenwischvorrichtung (200) nach Anspruch 4, **dadurch gekennzeichnet, dass** sich die Öffnung von innen nach außen konisch verjüngt.

8. Scheibenwischvorrichtung (10, 20, 200, 30, 40, 50, 500, 60) nach einem der Ansprüche 1 bis 7, **dadurch gekennzeichnet, dass** das Lager (18, 22, 202, 32, 42, 52, 502, 62) in einem Deckel des Getriebegehäuses (12) angeordnet ist.

9. Scheibenwischvorrichtung (10, 20, 200, 30, 40, 50, 500, 60) nach Anspruch 8, **dadurch gekennzeichnet, dass** der Deckel aus Metall ist.

10. Scheibenwischvorrichtung (10, 20, 200, 40) nach einem der Ansprüche 1 bis 9, **dadurch gekennzeichnet, dass** das Lager (18, 22, 202, 42) eine Kunststoffbuchse (101, 23, 203, 43) aufweist.

11. Scheibenwischvorrichtung (40) nach Anspruch 10, **dadurch gekennzeichnet, dass** an der Kunststoffbuchse (43) ein Sicherungselement (44) anliegt.

12. Scheibenwischvorrichtung (20, 200, 30, 50, 500) nach einem der Ansprüche 1 bis 11, **dadurch gekennzeichnet, dass** das Lager (22, 202, 32, 52, 502) eine zylindrische Hülse (24) aufweist.

13. Scheibenwischvorrichtung (20, 200, 30, 50, 500) nach Anspruch 12, **dadurch gekennzeichnet, dass** die zylindrische Hülse (24) gesintert und in Öl getränkt ist.

14. Scheibenwischvorrichtung (30) nach einem der Ansprüche 1 bis 13, **dadurch gekennzeichnet, dass** an der Stirnseite der Welle (15) eine Scheibe (34) mit einer konvexen Seite angeordnet ist.

15. Scheibenwischvorrichtung (50, 500, 60) nach einem der Ansprüche 1 bis 13, **dadurch gekennzeichnet, dass** an der Stirnseite der Welle (15) eine Scheibe (53, 505, 65) mit einem eine geringe Ausdehnung aufweisenden Absatz (54, 506, 66) angeordnet ist.

## Claims

1. Wiper device (10, 20, 200, 30, 40, 50, 500, 60), in particular for a motor vehicle, with at least one gearing (11, 21, 201, 31, 41, 51, 501, 61) and a device for reducing a tooth backlash of toothed gears (13, 14) in engagement with each other, wherein a bearing (18, 22, 202, 32, 42, 52, 502, 62) for mounting a shaft (15) provided with at least one toothed gear (13) is arranged on the gearing housing (12), wherein the bearing (18, 22, 202, 32, 42, 52, 502, 62) is provided with a device which presses the toothed gears (13, 14) in engagement with each other against each other, and wherein, of the toothed gears (13, 14) in engagement with each other, one toothed gear (14) is designed to be a worm gear, **characterized in that** the other toothed gear (13) is designed to be a bevel gear, and **in that** the shaft (15) which is provided with the bevel gear (13) is mounted in the bearing (18, 22, 202, 32, 42, 52, 502, 62) which is provided with the device pressing the toothed gears (13, 14) against each other.

2. Wiper device (10, 20, 200) according to Claim 1, **characterized in that** the bearing (18, 22, 202, 32, 42, 52, 502, 62) has a spring (19) which presses the toothed gears (13, 14) in engagement with each other against each other.

3. Wiper device (10, 20, 200) according to Claim 2, **characterized in that** the spring (19) is a corrugated washer or a disc spring.

4. Wiper device (10, 20, 200, 30, 40, 50, 500, 60) according to either of Claims 1 and 3, **characterized in that** the bearing (18, 22, 202, 32, 42, 52, 502, 62) is arranged in an opening (102, 503, 63) in the gearing housing (12).

5. Wiper device (10, 20, 200, 30, 40, 50, 500, 60) according to Claim 4, **characterized in that** the opening (102) has a caulking (45, 56).

6. Wiper device (500, 60) according to Claim 4, **characterized in that** the opening (503, 63) is provided with a peripheral groove (504, 64).

7. Wiper device (200) according to Claim 4, **characterized in that** the opening tapers conically from the inside to the outside.

8. Wiper device (10, 20, 200, 30, 40, 50, 500, 60) according to one of Claims 1 to 7, **characterized in that** the bearing (18, 22, 202, 32, 42, 52, 502, 62) is arranged in a cover of the gearing housing (12).

9. Wiper device (10, 20, 200, 30, 40, 50, 500, 60) according to Claim 8, **characterized in that** the cover is made of metal.

10. Wiper device (10, 20, 200, 40) according to one of Claims 1 to 9, **characterized in that** the bearing (18, 22, 202, 42) has a plastics bushing (101, 23, 203, 43).

11. Wiper device (40) according to Claim 10, **characterized in that** a securing element (44) bears against the plastics bushing (43).

12. Wiper device (20, 200, 30, 50, 500) according to one of Claims 1 to 11, **characterized in that** the bearing (22, 202, 32, 52, 502) has a cylindrical sleeve (24).

13. Wiper device (20, 200, 30, 50, 500) according to Claim 12, **characterized in that** the cylindrical sleeve (24) is sintered and soaked in oil.

14. Wiper device (30) according to one of Claims 1 to 13, **characterized in that** a washer (34) having a convex side is arranged on the end side of the shaft (15).

15. Wiper device (50, 500, 60) according to one of Claims 1 to 13, **characterized in that** a washer (53, 505, 65) having a step (54, 506, 66) of small extent is arranged on the end side of the shaft (15).

## Revendications

1. Dispositif d'essuie-glace (10, 20, 200, 30, 40, 50, 500, 60), notamment pour un véhicule automobile, comprenant au moins une transmission (11, 21, 201, 31, 41, 51, 501, 61) et un dispositif pour la réduction d'un jeu entre-dents de dents de roues dentées (13, 14) s'engrenant l'une avec l'autre, un palier (18, 22, 202, 32, 42, 52, 502, 62) pour le montage d'un arbre (15) muni d'au moins une roue dentée (13) étant disposé sur le boîtier de transmission (12), le palier (18, 22, 202, 32, 42, 52, 502, 62) étant pourvu d'un dispositif qui presse l'une contre l'autre les roues dentées (13, 14) s'engrenant l'une avec l'autre et, parmi les roues dentées (13, 14) s'engrenant l'une avec l'autre, l'une des roues dentées (14) étant réalisée sous forme de roue hélicoïdale, **caractérisé en ce que** l'autre roue dentée (13) est réalisée sous forme de roue conique et **en ce que** l'arbre (15) muni de la roue conique (13) est monté dans le palier (18, 22, 202, 32, 42, 52, 502, 62) pourvu du dispositif pressant l'une contre l'autre les roues dentées (13, 14).

2. Dispositif d'essuie-glace (10, 20, 200) selon la revendication 1, **caractérisé en ce que** le palier (18, 22, 202, 32, 42, 52, 502, 62) comprend un ressort (19) qui presse l'une contre l'autre les roues dentées (13, 14) s'engrenant l'une avec l'autre.

3. Dispositif d'essuie-glace (10, 20, 200) selon la revendication 2, **caractérisé en ce que** le ressort (19) est une rondelle ondulée ou un ressort Belleville.

4. Dispositif d'essuie-glace (10, 20, 200, 30, 40, 50, 500, 60) selon la revendication 1 ou 3, **caractérisé en ce que** le palier (18, 22, 202, 32, 42, 52, 502, 62) est disposé dans une ouverture (102, 503, 63) du boîtier de transmission (12).

5. Dispositif d'essuie-glace (10, 20, 200, 30, 40, 50, 500, 60) selon la revendication 4, **caractérisé en ce que** l'ouverture (102) comprend un matage (45, 56).

6. Dispositif d'essuie-glace (500, 60) selon la revendication 4, **caractérisé en ce que** l'ouverture (503, 63) est pourvue d'une rainure périphérique (504, 64).

7. Dispositif d'essuie-glace (200) selon la revendication 4, **caractérisé en ce que** l'ouverture se rétrécit de manière conique depuis l'intérieur vers l'extérieur.

8. Dispositif d'essuie-glace (10, 20, 200, 30, 40, 50, 500, 60) selon l'une quelconque des revendications 1 à 7, **caractérisé en ce que** le palier (18, 22, 202, 32, 42, 52, 502, 62) est disposé dans un couvercle du boîtier de transmission (12).

9. Dispositif d'essuie-glace (10, 20, 200, 30, 40, 50, 500, 60) selon la revendication 8, **caractérisé en ce que** le couvercle est constitué de métal.

10. Dispositif d'essuie-glace (10, 20, 200, 40) selon l'une quelconque des revendications 1 à 9, **caractérisé en ce que** le palier (18, 22, 202, 42) comprend une douille en matière plastique (101, 23, 203, 43).

11. Dispositif d'essuie-glace (40) selon la revendication 10, **caractérisé en ce qu'**un élément de fixation (44) s'applique contre la douille en matière plastique (43).

12. Dispositif d'essuie-glace (20, 200, 30, 50, 500) selon l'une quelconque des revendications 1 à 11, **caractérisé en ce que** le palier (22, 202, 32, 52, 502) comprend un manchon cylindrique (24).

13. Dispositif d'essuie-glace (20, 200, 30, 50, 500) selon la revendication 12, **caractérisé en ce que** le manchon cylindrique (24) est fritté et imprégné d'huile.

14. Dispositif d'essuie-glace (30) selon l'une quelconque des revendications 1 à 13, **caractérisé en ce qu'**un disque (34) doté d'un côté convexe est disposé au niveau du côté frontal de l'arbre (15).

15. Dispositif d'essuie-glace (50, 500, 60) selon l'une quelconque des revendications 1 à 13, **caractérisé en ce qu'**un disque (53, 505, 65) doté d'un épaulement (54, 506, 66) présentant une faible étendue est disposé au niveau du côté frontal de l'arbre (15).
